# EUROPEAN PATENT SPECIFICATION

(11) **EP 4 007 131 B1**
(45) Date of publication and mention of the grant of the patent: **20.08.2025**
(21) Application number: 20858731.1
(22) Date of filing: 28.08.2020
(51) Int. Cl.: H02K 5/20, H02K 1/20, H02K 7/18, H02K 9/04

(54) **METHOD AND APPARATUS FOR REDUCING CIRCUMFERENTIAL TEMPERATURE DIFFERENCE BETWEEN COIL AND IRON CORE OF MOTOR**
VERFAHREN UND VORRICHTUNG ZUR VERMINDERUNG DER UMFANGSTEMPERATURDIFFERENZ ZWISCHEN SPULE UND EISENKERN EINES MOTORS
PROCÉDÉ ET APPAREIL POUR RÉDUIRE LA DIFFÉRENCE DE TEMPÉRATURE CIRCONFÉRENTIELLE ENTRE UNE BOBINE ET UN NOYAU DE FER D'UN MOTEUR

(30) Priority: 30.08.2019 CN 201910813713; 30.08.2019 CN 201921429243 U
(43) Date of publication of application: 01.06.2022
(73) Proprietor: Dongfang Electric Machinery Co., Ltd., Deyang, Sichuan 618000 (CN)
(72) Inventor: WANG, Chao, Sichuan 618000 (CN); ZHOU, Guanghou, Sichuan 618000 (CN); JIANG, Xiaopin, Sichuan 618000 (CN); LIAO, Yigang, Sichuan 618000 (CN); WANG, Fengjun, Sichuan 618000 (CN); YANG, Yan, Sichuan 618000 (CN)
(74) Representative: Patrade A/S
(86) International application number: PCT/CN2020/112046
(87) International publication number: WO 2021/037194

(56) References cited:
- EP-A1- 0 639 883
- EP-A1- 2 672 613
- EP-A1- 2 975 742
- CN-A- 1 109 225
- CN-A- 102 332 780
- CN-A- 102 332 780
- CN-A- 109 474 113
- CN-A- 110 429 746
- CN-A- 110 429 747
- CN-U- 204 118 962
- CN-U- 210 350 922
- DE-A1- 102014 216 692
- JP-A- H01 138 947

## Description

### TECHNICAL FIELD

The invention relates to the technical field of a wind turbine generator, in particular to a method and structure for reducing circumferential temperature difference of a generator/motor coil and core.

### BACKGROUND

A large low-speed rotating generator, especially the direct-driven wind turbine generator, usually provides low rotation speed of about 10 r/min and the air pressure of few Pa and cannot drive sufficient air to flow inside the generator so as to carry away the heat generated during the operation of the generator. This problem is solved commonly by configuring some fans on a generator base so as to drive the air inside to flow. However, the fans cannot be uniformly arranged circumferentially on the generator base due to the other arrangement such as a brake, a locking device, an outlet box, a manhole and the like. An inlet and an outlet of the fans can only be arranged at the upper part of the generator base, however, this arrangement would cause uneven temperature distribution on the stator coil and core, and the circumferential temperature difference can reach 30K-40K when the generator bears high load according to the experiments and calculations.

In recent years, the fans may be uniformly arranged circumferentially on the generator base. However, due to the large diameter of the generator/motor causing the large circumferential space which needs high airflow speed, the circumferential temperature distribution on the stator coil and core are still uneven.

Nowadays, the limitation to the generator/motor temperature focus on its hottest spot temperature, however, the uneven circumferential temperature not only seriously affect the maximum output of the generator/motor, but the measured temperature may also not truly reflect the actual maximum temperature of the generator/motor stator coil and iron core, which brings potential hazards to the generator/motor in operation.

Chinese patent publication CN109787381A published on 21 May 2019 disclosed a cooling device for motor, characterized in that the cooling device for motor comprises:
a plurality of stator ventilation holes formed in a stator core along an axial direction of the stator core;
a first mounting element and a second mounting element each shaped corresponding to the stator core, respectively coupled to both sides of the stator core in the axial direction, wherein a plurality of first ventilation holes and a plurality of second ventilation holes are formed in respective mounting elements, in the axial direction;
a bracket comprising a main body, as well as a first support part and second support part individually protruding radially outward from both sides of the main body, wherein the main body is configured with a plurality of bracket ventilation holes, and the first mounting element and second mounting element are respectively supported on the first support part and the second support part, wherein the first ventilation holes and second ventilation holes respectively are corresponded to the corresponding stator ventilation holes in the plurality of stator ventilation holes to form a first ventilation channel and second ventilation channel which are independent from each other, whereby the air flows into/through the first ventilation channel and second ventilation channel respectively and oppositely from sides of the stator core in the axial direction, and flows out through the plurality of bracket ventilation holes.

Chinese publication number CN202856493U published on 03 April 2013 disclosed an air guide plate between the rotor poles of a hydraulic generator, comprising an air guide plate, a screw, a fastener, a pressing plate, a backing plate and a fixing block, characterized in that the fixing block is pre-assembled in a yoke, then the screw is screwed into the fixing block which is fastened by the backing plate and fastener; finally, the backing plate, air guide plate and pressing plate are fastened by the upper portion of the screw and the fastener.

Chinese patent publication CN102332780A published on 25 January 2012 disclosed a wind turbine generator.

The prior art above cannot effectively improve the circumferential uniformity of the airflow and cannot achieve the circumferential uniform distribution of the airflow speed due to poor structural design, so that the circumferential temperature difference of the generator/motor cannot be reduced effectively, and the structure is inconveniently implemented due to complication in operation.

### SUMMARY OF INVENTION

In order to overcome the above-mentioned defects of the prior art, the present invention provides a method and structure for reducing circumferential temperature difference of generator/motor coil and core. The present invention is simple and flexible in operation and convenient to be implemented, and may not only improve the circumferential uniformity of airflow, but also may achieve the circumferential uniform distribution of the airflow speed by adjusting the area of the air inlet hole for different air inlet holes through adjusting an air volume adjustment plate according to actual needs, and may reduce the circumferential temperature difference of the generator/motor to 10-20 K.

The present invention is achieved by the following technical solution:
A method for reducing circumferential temperature difference between a generator coil and a generator core, according to claim 1, the method comprises the steps of:
a. installing a structure for reducing circumferential temperature difference of generator/motor coil and core to a wind generator, the structure for reducing circumferential temperature difference of generator/motor coil and core includes a rotor base, a rotor core mounted on the rotor base, a plurality of rotor magnetic steels arranged in the axial direction of the rotor core, a plurality of stator core segments, a first core pressing plate, a second core pressing plate and a tightening screw, wherein the plurality of stator core segments are stacked from silicon steel sheets which are provided with a slot for placing stator coils, and a stator channel steel is arranged between any both adjacent segments of the stator core segments, whereby a stator ventilation channel is formed by the adjacent stator core segments and the stator channel steel, for the flow of a medium for cooling purpose. The plurality of stator core segments are penetrated by the tightening screw whose one end is fixedly connected to the first core pressing plate and the other end is fixedly connected to the second core pressing plate. A gap is provided between the rotor magnetic steels and the stator core segments, a first circumferential ring plate, whose one end is fixedly connected to the first core pressing plate and the other end is fixedly connected to the second core pressing plate, is fixedly connected to the stator core segments, and at least three axial plates are fixedly connected to the inner wall of the first circumferential ring plate, whereby an air inlet chamber or an air outlet chamber is formed by the first circumferential ring plate, the stator core segments and two adjacent axial plates, and the air inlet chamber and air outlet chamber are arranged alternately. A plurality of air inlet holes and air outlet holes are configured on the first circumferential ring plate, wherein each air inlet hole is in communication with the corresponding air inlet chamber and each air outlet hole is in communication with the corresponding air outlet chamber. A first radial plate and second radial plate are fixedly connected to the outer wall of the first circumferential ring plate, and a second circumferential ring plate is fixedly connected to the first plate and second plate. An inclined baffle is connected to the first plate via a plurality of axial connecting plates.
   An air outlet duct is connected to the second circumferential ring plate and communicated with the air outlet chamber, while an intake air duct is connected to the first plate and communicated with the air inlet chamber;
b. installing an inclined baffle at the outlet of an intake air duct, wherein the angle between the inclined baffle and the first plate is 30 degrees-60 degrees, and installing an air volume adjustment plate at each air inlet hole, wherein the air volume adjustment plate is hinged with a first circumferential ring plate, whereby the circumferential airflow varies by adjusting the air volume adjustment plate; and
c. configuring an air flowing area, which is minimized when the air inlet hole is close to the axis of the intake air duct, and is maximized when the circumferentially symmetrical air inlet hold is far away from the axis of the intake air duct.

Preferably the silicon steel sheet is 0.5 mm or 0.35 mm in thickness.

Preferably the plurality of air inlet holes and air outlet holes are arranged alternately on the first circumferential ring plate at interval.

Preferably a large chamber is formed by the rotor base, the first circumferential ring plate and the first plate, and communicated with the intake air duct and the air inlet chamber.

The ratio of the maximum air flowing area when the air inlet hole is far away from the axis of the intake air duct and the minimum air flowing area when the circumferentially symmetrical air inlet hole is close to the axis of the intake air duct is 2:1 to 10:1.

The present invention is also achieved by a structure for reducing circumferential temperature difference of generator/motor coil and core according to claim 6, which includes a rotor base, a rotor core mounted on the rotor base, a plurality of rotor magnetic steels arranged in the axial direction of the rotor core, a plurality of stator core segments, a first core pressing plate, a second core pressing plate and a tightening screw, wherein a stator channel steel is arranged between any both adjacent segments of the stator core segments, whereby a stator ventilation channel is formed by the adjacent stator core segments and the stator channel steel, for the flow of a medium for cooling purpose. The plurality of stator core segments are penetrated by the tightening screw whose one end is fixedly connected to the first core pressing plate and the other end is fixedly connected to the second core pressing plate. A gap is provided between the rotor magnetic steels and the stator core segments, a first circumferential ring plate, whose one end is fixedly connected to the first core pressing plate and the other end is fixedly connected to the second core pressing plate, is fixedly connected to the stator core segments, and at least three axial plates are fixedly connected to the inner wall of the first circumferential ring plate, whereby an air inlet chamber or an air outlet chamber is formed by the first circumferential ring plate, the stator core segments and two adjacent axial plates, and the air inlet chamber and air outlet chamber are arranged alternately. A plurality of air inlet holes and air outlet holes are configured on the first circumferential ring plate, wherein each air inlet hole is in communication with the corresponding air inlet chamber and each air outlet hole is in communication with the corresponding air outlet chamber. A first radial plate and second radial plate are fixedly connected to the outer wall of the first circumferential ring plate, and a second circumferential ring plate is fixedly connected to the first plate and second plate. An inclined baffle is connected to the first plate via a plurality of axial connecting plates. An air outlet duct is connected to the second circumferential ring plate and communicated with the air outlet chamber, while an intake air duct is connected to the first plate and communicated with the air inlet chamber.

Preferably the plurality of air inlet holes and air outlet holes are arranged alternately on the first circumferential ring plate at interval.

Preferably a large chamber is formed by the rotor base, the first circumferential ring plate and the first plate, and communicated with the intake air duct and the air inlet chamber.

According to the invention, the inclined baffle is installed at the outlet of the intake air duct, wherein the angle between the inclined baffle and the first plate is 30 degrees - 60 degrees.

The present invention has the advantageous effect in the following aspects:
1. The method according to the present invention comprises the steps of: "a. installing a structure for reducing circumferential temperature difference of generator coil and core to a wind generator; b. installing an inclined baffle at the outlet of an intake air duct, wherein the angle between the inclined baffle and a first plate is 30 degrees- 60 degrees, and installing an air volume adjustment plate at an air inlet hole, wherein the air volume adjustment plate is hinged with a first circumferential ring plate, whereby the circumferential airflow varies by adjusting the air volume adjustment plate; and c. configuring an air flowing area, which is minimized when the air inlet hole is close to the axis of the intake air duct, and is maximized when the circumferentially symmetrical air inlet hole is far away from the axis of the intake air duct.". Compared with the prior art, the method is simple and flexible in operation and convenient to be implemented, and may not only improve the circumferential uniformity of airflow, but also may achieve the circumferential uniform distribution of the airflow speed by adjusting the area of the air inlet hole for different air inlet holes through adjusting an air volume adjustment plate according to actual needs. This method may reduce the circumferential temperature difference of the generator/motor to 10-20 K.
2. The structure for reducing circumferential temperature difference of generator/motor coil and core, according to the present invention, includes a rotor base, a rotor core mounted on the rotor base , a plurality of rotor magnetic steels arranged in the axial direction of the rotor core, a plurality of stator core segments, a first core pressing plate, a second core pressing plate and a tightening screw, wherein a stator channel steel is arranged between any both adjacent segments of the stator core segments, whereby a stator ventilation channel is formed by the adjacent stator core segments and the stator channel steel, for the flow of a medium for cooling purpose. The plurality of stator core segments are penetrated by the tightening screw whose one end is fixedly connected to the first core pressing plate and the other end is fixedly connected to the second core pressing plate. An gap is provided between the rotor magnetic steels and the stator core segments, a first circumferential ring plate, whose one end is fixedly connected to the first core pressing plate and the other end is fixedly connected to the second core pressing plate, is fixedly connected to the stator core segments, and at least three axial plates are fixedly connected to the inner wall of the first circumferential ring plate, whereby an air inlet chamber or an air outlet chamber is formed by the first circumferential ring plate, the stator core segments and the two adjacent axial plates, and the air inlet chamber and air outlet chamber are arranged alternately. A plurality of air inlet holes and air outlet holes are configured on the first circumferential ring plate, wherein each hole is in communication with the corresponding air inlet chamber and each hole is in communication with the corresponding air outlet chamber. A first plate and second plate are fixedly connected to the outer wall of the first circumferential ring plate, and a second circumferential ring plate is fixedly configured/connected between/to the first plate and second plate. An inclined baffle is connected to the first plate via a plurality of connecting plates. An air outlet duct is connected to the second circumferential ring plate and communicated with the air outlet chamber, while an intake air duct is connected to the first plate and communicated with the air inlet chamber. As the generator/motor is running, on the one hand, the high-speed airflow from a fan impacts the inclined baffle, resulting in the circumferential and axial diffusion of the airflow, so that the circumferential uniformity of airflow may be improved; on the other hand, the circumferential uniform distribution of the airflow speed may be achieved by adjusting the area of the air inlet hole for different air inlet holes through adjusting an air volume adjustment plate according to actual needs; the structure is simple, adjustable and convenient to be implemented, it may bring out a benefit, which reduces the circumferential temperature difference of the generator/motor to 10-20 K.
3. According to the present invention, the silicon steel sheet is 0.5 mm or 0.35 mm in thickness, leading to easy selection and process.
4. According to the present invention, the plurality of air inlet holes and air outlet holes are arranged alternately on the first circumferential ring plate at interval. Such arrangement may further improve the circumferential uniformity of airflow and heat dissipation effect.
5. According to the present invention, a large chamber is formed by the rotor base, the first circumferential ring plate and the first plate, and communicated with the intake air duct and the air inlet chamber. Such arrangement may improve the ventilation and heat dissipation effect.
6. According to the present invention, the ratio of the maximum air flowing area and the minimum air flowing area in the air inlet holes is 2:1 to 10:1, where the maximum air flowing area is configured at the air inlet hole far from the axis of the intake air duct while the minimum air flowing area is configured at the air inlet hole close to the axis of the intake air duct. With this specific area ratio, the total air volume and the air volume uniformity of the generator are all considered to reduce the circumferential temperature difference of the generator/motor effectively.
7. According to the present invention, the inclined baffle is installed at the outlet of the intake air duct, wherein the angle between the inclined baffle and the first plate is 30 degree- 60 degrees. If such angle is too small, the inclined baffle will strongly block the airflow from the fan, and the total air volume to the generator will be reduced, while if such angle is too large, the airflow diffusion will impact the circumferential uniformity of the airflow in the generator/motor. Therefore, it is necessary to adopt a certain angle to reach a good balance between the said scenarios.

### BRIEF DESCRIPTION OF DRAWINGS

The present invention will be described in further detail with reference to the accompanying drawings and detailed description, in which:
Fig. 1 is a schematic view showing a structure for reducing circumferential temperature difference of large-sized generator/motor coil and core according to the present invention;
Fig. 2 is a schematic view showing the structure of a segment of the stator core according to the present invention;
Fig. 3 is a schematic view showing the airflow in the circumferential airflow zone of the present invention;
Fig. 4 is a schematic view showing an arrangement of circumferential air inlet holes and air outlet holes according to the present invention;
Fig. 5 is a schematic view showing a structure for reducing circumferential temperature difference of generator/motor coil and core according to the present invention when applying to a generator/motor;

### List of reference characters:

1. rotor base, 2. rotor core, 3. rotor magnetic steel, 4. stator core segment, 5. first core pressing plate, 6. second core pressing plate, 7. tightening screw, 8. silicon steel sheet, 9. stator coil, 10. slot, 11. stator channel steel, 12. stator ventilation passage, 13. gap, 14. first circumferential ring plate, 15. axial plate, 16. air inlet chamber, 17. air outlet chamber, 18. air inlet hole, 19. air outlet hole, 20. first plate, 21. second plate, 22. second circumferential ring plate, 23. connecting plate, 24. inclined baffle, 25. air outlet duct, 26. intake air duct, 27. air volume adjustment plate, 28. large chamber, 29. air flowing area.

### DETAILED DESCRIPTION OF EMBODIMENTS

### Embodiment 1

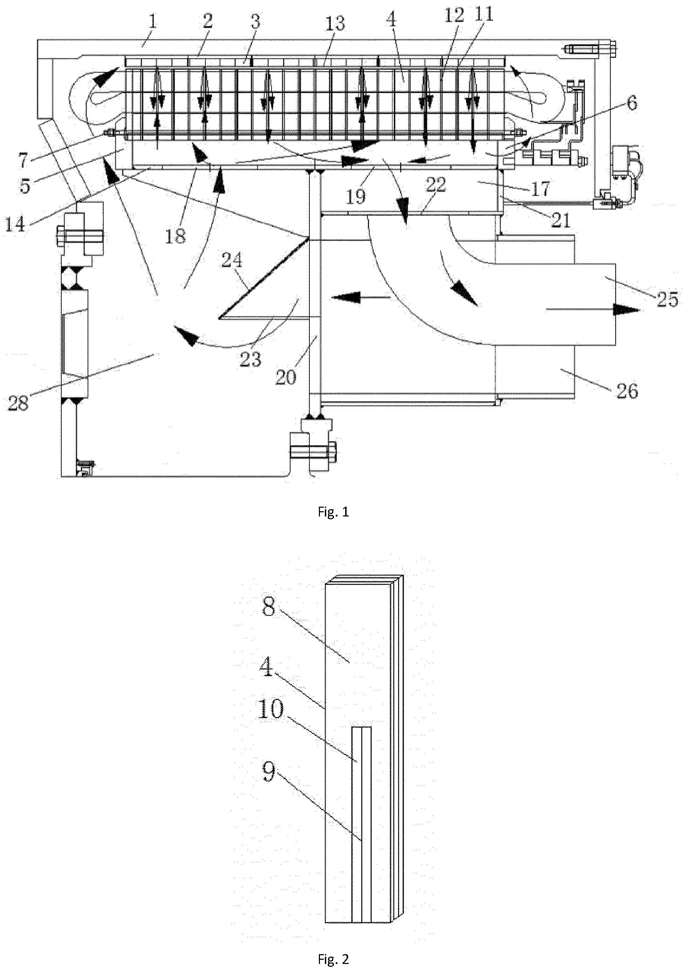

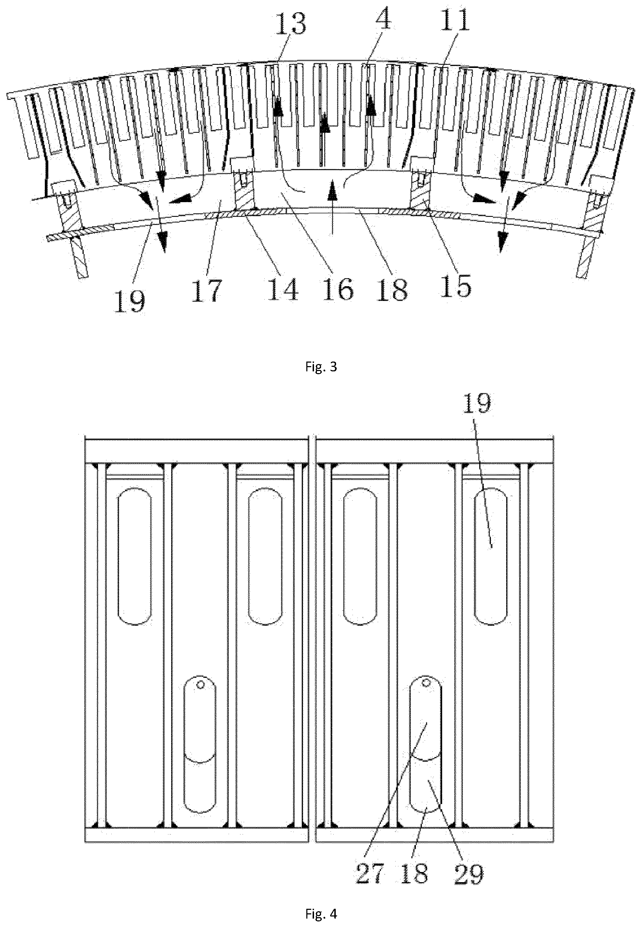

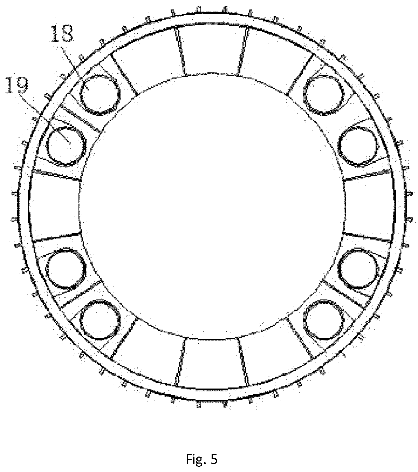

Referring to FIGs. 1-5, a method for reducing circumferential temperature difference of a generator/motor coil and core includes the steps of:
a. installing a structure for reducing circumferential temperature difference of generator/motor coil and core to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

The structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

Compared with the prior art, the method is simple and flexible in operation and convenient to be implemented, and may not only improve the circumferential uniformity of airflow, but also may achieve the circumferential uniform distribution of the airflow speed by adjusting the area of the air inlet hole for different air inlet holes through adjusting an air volume adjustment plate according to actual needs. This method may reduce the circumferential temperature difference of the generator/motor to 10-20 K.

### Embodiment 2

Referring to FIGs. 1-5, a method for reducing circumferential temperature difference of generator/motor coil and core includes the steps of:
a. installing a structure for reducing circumferential temperature difference of a generator/motor coil and core described in Embodiment 1 to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

As the generator/motor is running, on the one hand, the high-speed airflow from a fan impacts the inclined baffle, resulting in the circumferential and axial diffusion of the airflow, so that the circumferential uniformity of airflow may be improved; on the other hand, the circumferential uniform distribution of the airflow speed may be achieved by adjusting the area of the air inlet hole for different air inlet holes through adjusting an air volume adjustment plate according to actual needs; the structure is simple, adjustable and convenient to be implemented, it may bring out a benefit, which reduces the circumferential temperature difference of the generator/motor to 10-20 K.

### Embodiment 3

Referring to FIGs. 1-5, a method for reducing circumferential temperature difference of generator/motor coil and core includes the steps of:
a. installing a structure for reducing circumferential temperature difference of generator/motor coil and core to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

The structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The silicon steel sheet 8 is 0.5 mm in thickness.

The plurality of air inlet holes 18 and air outlet holes 19 are arranged alternately on the first circumferential ring plate 14 at interval. Such arrangement may further improve the circumferential uniformity of airflow and heat dissipation effect.

A large chamber 28 is formed by the rotor base 1, the first circumferential ring plate 14 and the first plate 20, and communicated with the intake air duct 26 and the air inlet chamber 16. Such arrangement may improve the ventilation and heat dissipation effect.

### Embodiment 4

Referring to FIGs. 1-5, a method for reducing circumferential temperature difference of generator/motor coil and core includes the steps of:
a. installing a structure for reducing circumferential temperature difference of generator/motor coil and core to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

The structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The silicon steel sheet 8 is 0.35 mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The ratio of the maximum air flowing area 29 when the air inlet hole is far away from the axis of the intake air duct and the minimum air flowing area 29 when the circumferentially symmetrical air inlet hole is close to the axis of the intake air duct is 2: 1.

### Embodiment 5

Referring to FIGs. 1-5, a method for reducing circumferential temperature difference of generator/motor coil and core includes the steps of:
a. installing a structure for reducing circumferential temperature difference of generator/motor coil and core to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

The structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. A gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The silicon steel sheet 8 is 0.35 mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The ratio of the maximum air flowing area 29 when the air inlet hole is far away from the axis of the intake air duct and the minimum air flowing area 29 when the circumferentially symmetrical air inlet hole is close to the axis of the intake air duct is 5: 1.

### Embodiment 6

Referring to FIGs. 1-5, a method for reducing circumferential temperature difference of generator/motor coil and core includes the steps of:
a. installing a structure for reducing circumferential temperature difference of generator/motor coil and core to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

The structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The silicon steel sheet 8 is 0.35 mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The ratio of the maximum air flowing area 29 when the air inlet hole is far away from the axis of the intake air duct and the minimum air flowing area 29 when the circumferentially symmetrical air inlet hole is close to the axis of the intake air duct is 8: 1.

### Embodiment 7

Referring to FIGs. 1-5, a method for reducing circumferential temperature difference of generator/motor coil and core includes the steps of:
a. installing a structure for reducing circumferential temperature difference of generator/motor coil and core to a wind generator;
b. installing an inclined baffle 24 at the outlet of an intake air duct 26, wherein the angle between the inclined baffle 24 and a first plate 20 is 30 degrees, and installing an air volume adjustment plate 27 at an air inlet hole 18, wherein the air volume adjustment plate 27 is hinged with a first circumferential ring plate 14, whereby the circumferential airflow varies by adjusting the air volume adjustment plate 27; and
c. configuring an air flowing area 29, which is minimized when the air inlet hole is close to the axis of the intake air duct, and is maximized when the circumferentially symmetrical air inlet hole is far away from the axis of the intake air duct.

The structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The silicon steel sheet 8 is 0.35 mm in thickness.

The plurality of air inlet holes 18 and air outlet holes 19 are arranged alternately on the first circumferential ring plate 14 are arranged alternately, at interval.

A large chamber 28 is formed by the rotor base 1, the first circumferential ring plate 14 and the first plate 20, and communicated with the intake air duct 26 and the air inlet chamber 16.

The ratio of the maximum air flowing area 29 when the air inlet hole is far away from the axis of the intake air duct and the minimum air flowing area 29 when the circumferentially symmetrical air inlet hole is close to the axis of the intake air duct is 10: 1.

Compared with the prior art, the method is simple and flexible in operation and convenient to be implemented, and may not only improve the circumferential uniformity of airflow, but also may achieve the circumferential uniform distribution of the airflow speed by adjusting the area of the air inlet hole for different air inlet holes through adjusting an air volume adjustment plate according to actual needs. This method may reduce the circumferential temperature difference of the generator/motor to 10-20 K.

The ratio of the maximum air flowing area 29 when the air inlet hole is far away from the axis of the intake air duct and the minimum air flowing area 29 when the circumferentially symmetrical air inlet hole is close to the axis of the intake air duct is 10: 1. With this specific area ratio, the total air volume and the air volume uniformity of the generator are all considered to reduce the circumferential temperature difference of the generator/motor effectively.

### Embodiment 8

Referring to FIGS. 1, 3, 4 and 5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

### Embodiment 9

Referring to FIGS. 1, 3, 4 and 5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The plurality of air inlet holes 18 and air outlet holes 19 are arranged alternately on the first circumferential ring plate 14 at interval.

### Embodiment 10

Referring to FIGS. 1, 3, 4 and 5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

### Embodiment 11

Referring to FIGS. 1, 3, 4 and 5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 30 degrees.

### Embodiment 12

Referring to FIGS. 1, 3, 4 and 5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 45 degrees.

### Embodiment 13

Referring to FIGS. 1, 3, 4 and 5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 60 degrees.

If such angle is too small, the inclined baffle 24 will strongly block the airflow from the fan, and the total air volume to the generator/motor will be reduced, while if such angle is too large, the airflow diffusion will impact the circumferential uniformity of the airflow in the generator/motor. There it is necessary to adopt a certain angle to reach a good balance between the said scenarios.

## Claims

1. A method for reducing circumferential temperature difference of a generator/motor coil and core, the method comprises the steps of:
a. installing a structure for reducing circumferential temperature difference of generator/motor coil and core to a wind generator; wherein the structure for reducing circumferential temperature difference of generator/motor coil and core includes a rotor base (1), a rotor core (2) mounted on the rotor base (1), a plurality of rotor magnetic steels (3) arranged in the axial direction of the rotor core (2), a plurality of stator core segments (4), a first core pressing plate (5), a second core pressing plate (6) and a tightening screw (7), wherein the plurality of stator core segments (4) are stacked from silicon steel sheets (8) which are provided with a slot (10) for placing stator coils (9), and a stator channel steel (11) is arranged between any both adjacent segments of the stator core segments (4), whereby a stator ventilation channel (12) is formed by the adjacent stator core segments (4) and the stator channel steel (11), for the flow of a medium for cooling purpose, wherein the plurality of stator core segments (4) are penetrated by the tightening screw (7) whose one end is fixedly connected to the first core pressing plate (5) and the other end is fixedly connected to the second core pressing plate (6); a gap (13) is provided between the rotor magnetic steel (3) and the stator core segments (4), a first circumferential ring plate (14), whose one end is fixedly connected to the first core pressing plate (5) and the other end is fixedly connected to the second core pressing plate (6), is fixedly connected to the stator core segments (4), and at least three axial plates (15) are fixedly connected to the inner wall of the first circumferential ring plate (14) facing the stator core segments (4), whereby an air inlet chamber (16) or an air outlet chamber (17) is formed by the first circumferential ring plate (14), the stator core segments (4) and two adjacent axial plates (15), and the air inlet chamber (16) and air outlet chamber (17) are arranged alternately; a plurality of air inlet holes (18) and air outlet holes (19) are configured on the first circumferential ring plate (14), wherein each air inlet hole (18) is in communication with the corresponding air inlet chamber (16) and each air outlet hole (19) is in communication with the corresponding air outlet chamber (17); a first radial plate (20) and second radial plate (21) are fixedly connected to the outer wall of the first circumferential ring plate (14), and a second circumferential ring plate (22) is fixedly connected to the first radial plate (20) and second radial plate (21); an inclined baffle (24) is connected to the first radial plate (20) via a plurality of axial connecting plates (23); an air outlet duct (25) is connected to the second circumferential ring plate (22) and communicated with the air outlet chamber (17), while an intake air duct (26) is connected to the first radial plate (20) and communicated with the air inlet chamber (16);
b. installing the inclined baffle (24) at the outlet of an intake air duct (26), wherein the angle between the inclined baffle (24) and the first radial plate (20) is 30 degrees to 60 degrees, and installing an air volume adjustment plate (27) at each air inlet hole (18), wherein the air volume adjustment plate (27) is hinged with the first circumferential ring plate (14), whereby the circumferential airflow varies by adjusting the air volume adjustment plate (27); and
c. configuring an air flowing area (29) of the air inlet hole (18), which is minimized when the air inlet hole (18) is closed from the side of the intake air duct, and is maximized when the air inlet hole (18) is opened towards the side of the intake air duct.

2. The method according to claim 1, **characterized in that** the silicon steel sheet (8) is 0.5 mm or 0.35 mm in thickness.

3. The method according to claim 1, **characterized in that** the plurality of air inlet holes (18) and air outlet holes (19) are arranged alternately on the first circumferential ring plate (14) at interval.

4. The method according to claim 1, **characterized in that** a large chamber (28) is formed by the rotor base (1), the first circumferential ring plate (14) and the first radial plate (20), and communicated with the intake air duct (26) and the air inlet chamber (16).

5. The method according to claim 1, **characterized in that** a ratio of a maximum to a minimum of the variable air flowing area (29) is 2: 1 to 10:1.

6. A structure for reducing circumferential temperature difference of generator/motor coil and core, comprising a rotor base (1), a rotor core (2) mounted on the rotor base (1), a plurality of rotor magnetic steels (3) arranged in the axial direction of the rotor core (2) wherein the structure further comprises a plurality of stator core segments (4), a first core pressing plate (5), a second core pressing plate (6) and a tightening screw (7), wherein a stator channel steel (11) is arranged between any both adjacent segments of the stator core segments (4), whereby a stator ventilation channel (12) is formed by the adjacent stator core segments (4) and the stator channel steel (11), for the flow of a medium for cooling purpose, wherein the plurality of stator core segments (4) are penetrated by the tightening screw (7) whose one end is fixedly connected to the first core pressing plate (5) and the other end is fixedly connected to the second core pressing plate (6); a gap (13) is provided between the rotor magnetic steels (3) and the stator core segments (4), a first circumferential ring plate (14), whose one end is fixedly connected to the first core pressing plate (5) and the other end is fixedly connected to the second core pressing plate (6), is fixedly connected to the stator core segments (4), and at least three axial plates (15) are fixedly connected to the inner wall of the first circumferential ring plate (14) facing the stator core segments (4), whereby an air inlet chamber (16) or an air outlet chamber (17) is formed by the first circumferential ring plate (14), the stator core segments (4) and two adjacent axial plates (15), and the air inlet chamber (16) and air outlet chamber (17) are arranged alternately; a plurality of air inlet holes (18) and air outlet holes (19) are configured on the first circumferential ring plate (14), wherein each air inlet hole (18) is in communication with the corresponding air inlet chamber (16) and each air outlet hole (19) is in communication with the corresponding air outlet chamber (17); a first radial plate (20) and second radial plate (21) are fixedly connected to the outer wall of the first circumferential ring plate (14), and a second circumferential ring plate (22) is fixedly connected to the first radial plate (20) and second radial plate (21); an inclined baffle (24) is connected to the first radial plate (20) via a plurality of axial connecting plates (23); an air outlet duct (25) is connected to the second circumferential ring plate (22) and communicated with the air outlet chamber (17), while an intake air duct (26) is connected to the first radial plate (20) and communicated with the air inlet chamber (16), the inclined baffle (24) is installed at the outlet of the intake air duct (26), and the angle between the inclined baffle (24) and the first radial plate (20) is 30 degrees - 60 degrees.

7. The structure according to claim 6, **characterized in that** the plurality of air inlet holes (18) and air outlet holes (19) are arranged alternately on the first circumferential ring plate (14) at interval.

8. The structure according to claim 6, **characterized in that** a large chamber (28) is formed by the rotor base (1), the first circumferential ring plate (14) and the first radial plate (20), and communicated with the intake air duct (26) and the air inlet chamber (16).

## Patentansprüche

1. Verfahren zur Verminderung einer Umfangstemperaturdifferenz einer Generator-/Motorspule und eines Kerns, wobei das Verfahren die Schritte umfasst von:
a. Installieren einer Struktur zur Verminderung einer Umfangstemperaturdifferenz einer Generator-/Motorspule und eines Kerns an einem Windgenerator; wobei die Struktur zur Verminderung einer Umfangstemperaturdifferenz einer Generator-/Motorspule und eines Kerns eine Rotorbasis (1), einen auf der Rotorbasis (1) montierten Rotorkern (2), eine Vielzahl von in der axialen Richtung des Rotorkerns (2) angeordneten Rotormagnetstählen (3), eine Vielzahl von Statorkernsegmenten (4), eine erste Kernpressplatte (5), eine zweite Kernpressplatte (6) und eine Festziehschraube (7) einschließt, wobei die Vielzahl von Statorkernsegmenten (4) aus Siliziumstahlblechen (8) gestapelt sind, die mit einem Schlitz (10) zum Platzieren von Statorspulen (9) versehen sind, und ein Statorkanalstahl (11) zwischen jeweils zwei benachbarten Segmenten der Statorkernsegmente (4) angeordnet ist, wodurch ein Statorbelüftungskanal (12) durch die benachbarten Statorkernsegmente (4) und den Statorkanalstahl (11) gebildet ist, für den Durchfluss eines Mediums zu Kühlzwecken, wobei die Vielzahl von Statorkernsegmenten (4) von der Festziehschraube (7) durchdrungen sind, deren eines Ende fest mit der ersten Kernpressplatte (5) verbunden ist und deren anderes Ende fest mit der zweiten Kernpressplatte (6) verbunden ist; wobei zwischen dem Rotormagnetstahl (3) und den Statorkernsegmenten (4) ein Spalt (13) bereitgestellt ist, eine erste Umfangsringplatte (14), deren eines Ende fest mit der ersten Kernpressplatte (5) verbunden ist und deren anderes Ende fest mit der zweiten Kernpressplatte (6) verbunden ist, fest mit den Statorkernsegmenten (4) verbunden ist, und mindestens drei Axialplatten (15) fest mit der den Statorkernsegmenten (4) zugewandten Innenwand der ersten Umfangsringplatte (14) verbunden sind, wodurch durch die erste Umfangsringplatte (14), die Statorkernsegmente (4) und zwei benachbarte Axialplatten (15) eine Lufteinlasskammer (16) oder eine Luftauslasskammer (17) gebildet ist, und die Lufteinlasskammer (16) und die Luftauslasskammer (17) abwechselnd angeordnet sind; eine Vielzahl von Lufteinlasslöchern (18) und Luftauslasslöchern (19) an der ersten Umfangsringplatte (14) konfiguriert sind, wobei jedes Lufteinlassloch (18) mit der entsprechenden Lufteinlasskammer (16) in Verbindung steht und jedes Luftauslassloch (19) mit der entsprechenden Luftauslasskammer (17) in Verbindung steht; eine erste Radialplatte (20) und eine zweite Radialplatte (21) fest mit der Außenwand der ersten Umfangsringplatte (14) verbunden sind, und eine zweite Umfangsringplatte (22) fest mit der ersten Radialplatte (20) und der zweiten Radialplatte (21) verbunden ist; wobei eine geneigte Prallplatte (24) über eine Vielzahl von axialen Verbindungsplatten (23) mit der ersten Radialplatte (20) verbunden ist; ein Luftauslasskanal (25) mit der zweiten Umfangsringplatte (22) verbunden ist und mit der Luftauslasskammer (17) in Verbindung steht, während ein Einlassluftkanal (26) mit der ersten Radialplatte (20) verbunden ist und mit der Lufteinlasskammer (16) in Verbindung steht;
b. Installieren der geneigten Prallplatte (24) an dem Auslass eines Einlassluftkanals (26), wobei der Winkel zwischen der geneigten Prallplatte (24) und der ersten Radialplatte (20) 30 Grad bis 60 Grad beträgt, und Installieren einer Luftvolumeneinstellplatte (27) an jedem Lufteinlassloch (18), wobei die Luftvolumeneinstellplatte (27) an der ersten Umfangsringplatte (14) angelenkt ist, wodurch der Umfangsluftstrom durch Einstellen der Luftvolumeneinstellplatte (27) variiert wird; und
c. Konfigurieren eines Luftströmungsbereichs (29) des Lufteinlasslochs (18), der minimiert ist, wenn das Lufteinlassloch (18) von der Seite des Einlassluftkanals aus geschlossen ist, und maximiert ist, wenn das Lufteinlassloch (18) zu der Seite des Einlassluftkanals hin geöffnet ist.

2. Verfahren nach Anspruch 1, **dadurch gekennzeichnet, dass** das Siliziumstahlblech (8) eine Dicke von 0,5 mm oder 0,35 mm aufweist.

3. Verfahren nach Anspruch 1, **dadurch gekennzeichnet, dass** die Vielzahl von Lufteinlasslöchern (18) und Luftauslasslöchern (19) abwechselnd in Abständen auf der ersten Umfangsringplatte (14) angeordnet sind.

4. Verfahren nach Anspruch 1, **dadurch gekennzeichnet, dass** durch die Rotorbasis (1), die erste Umfangsringplatte (14) und die erste Radialplatte (20) eine große Kammer (28) gebildet ist, und mit dem Einlassluftkanal (26) und der Lufteinlasskammer (16) in Verbindung steht.

5. Verfahren nach Anspruch 1, **dadurch gekennzeichnet, dass** ein Verhältnis zwischen einem maximalen und einem minimalen variablen Luftströmungsbereich (29) 2: 1 bis 10:1 beträgt.

6. Struktur zur Verminderung einer Umfangstemperaturdifferenz einer Generator-/Motorspule und eines Kerns, umfassend eine Rotorbasis (1), einen auf der Rotorbasis (1) montierten Rotorkern (2), eine Vielzahl von in der axialen Richtung des Rotorkerns (2) angeordneten Rotormagnetstählen (3), wobei die Struktur weiter eine Vielzahl von Statorkernsegmenten (4), eine erste Kernpressplatte (5), eine zweite Kernpressplatte (6) und eine Festziehschraube (7) umfasst, wobei ein Statorkanalstahl (11) zwischen jeweils zwei benachbarten Segmenten der Statorkernsegmente (4) angeordnet ist, wodurch ein Statorbelüftungskanal (12) durch die benachbarten Statorkernsegmente (4) und den Statorkanalstahl (11) gebildet ist, für den Durchfluss eines Mediums zu Kühlzwecken, wobei die Vielzahl von Statorkernsegmenten (4) von der Festziehschraube (7) durchdrungen sind, deren eines Ende fest mit der ersten Kernpressplatte (5) verbunden ist und deren anderes Ende fest mit der zweiten Kernpressplatte (6) verbunden ist; wobei zwischen den Rotormagnetstählen (3) und den Statorkernsegmenten (4) ein Spalt (13) bereitgestellt ist, eine erste Umfangsringplatte (14), deren eines Ende fest mit der ersten Kernpressplatte (5) verbunden ist und deren anderes Ende fest mit der zweiten Kernpressplatte (6) verbunden ist, fest mit den Statorkernsegmenten (4) verbunden ist, und mindestens drei Axialplatten (15) fest mit der Innenwand der ersten Umfangsringplatte (14) verbunden sind, die den Statorkernsegmenten (4) zugewandt ist, wodurch die erste Umfangsringplatte (14), die Statorkernsegmente (4) und zwei benachbarten Axialplatten (15) eine Lufteinlasskammer (16) oder eine Luftauslasskammer (17) gebildet ist, und die Lufteinlasskammer (16) und die Luftauslasskammer (17) abwechselnd angeordnet sind; wobei eine Vielzahl von Lufteinlasslöchern (18) und Luftauslasslöchern (19) an der ersten Umfangsringplatte (14) konfiguriert sind, wobei jedes Lufteinlassloch (18) mit der entsprechenden Lufteinlasskammer (16) in Verbindung steht und jedes Luftauslassloch (19) mit der entsprechenden Luftauslasskammer (17) in Verbindung steht; eine erste Radialplatte (20) und eine zweite Radialplatte (21) fest mit der Außenwand der ersten Umfangsringplatte (14) verbunden sind, und eine zweite Umfangsringplatte (22) fest mit der ersten Radialplatte (20) und der zweiten Radialplatte (21) verbunden ist; eine geneigte Prallplatte (24) über eine Vielzahl von axialen Verbindungsplatten (23) mit der ersten Radialplatte (20) verbunden ist; ein Luftauslasskanal (25) mit der zweiten Umfangsringplatte (22) verbunden ist und mit der Luftauslasskammer (17) in Verbindung steht, während ein Einlassluftkanal (26) mit der ersten Radialplatte (20) verbunden ist und mit der Lufteinlasskammer (16) in Verbindung steht, die geneigte Prallplatte (24) an dem Auslass des Einlassluftkanals (26) installiert ist und der Winkel zwischen der geneigten Prallplatte (24) und der ersten Radialplatte (20) 30 Grad - 60 Grad beträgt.

7. Struktur nach Anspruch 6, **dadurch gekennzeichnet, dass** die Vielzahl von Lufteinlasslöchern (18) und Luftauslasslöchern (19) abwechselnd in Abständen auf der ersten Umfangsringplatte (14) angeordnet sind.

8. Struktur nach Anspruch 6, **dadurch gekennzeichnet, dass** durch die Rotorbasis (1), die erste Umfangsringplatte (14) und die erste Radialplatte (20) eine große Kammer (28) gebildet ist, und mit dem Einlassluftkanal (26) und der Lufteinlasskammer (16) in Verbindung steht.

## Revendications

1. Procédé de réduction de la différence de température circonférentielle d'une bobine de générateur/moteur et d'un noyau, le procédé comprenant les étapes suivantes :
a. l'installation d'une structure de réduction de la différence de température circonférentielle de la bobine de générateur/moteur et du noyau sur une éolienne ; dans lequel la structure de réduction de la différence de température circonférentielle de la bobine de générateur/moteur et du noyau inclut une base (1) de rotor, un noyau de rotor (2) monté sur la base (1) de rotor, une pluralité d'aciers magnétiques de rotor (3) agencés dans la direction axiale du noyau de rotor (2), une pluralité de segments (4) de noyau de stator, une première plaque de pression de noyau (5), une seconde plaque de pression de noyau (6) et une vis (7) de serrage, dans lequel la pluralité de segments (4) de noyau de stator sont empilés à partir de feuilles (8) d'acier au silicium qui sont dotées d'une fente (10) destinée à placer des bobines de stator (9), et un acier de canal de stator (11) est agencé entre n'importe quels deux segments adjacents des segments (4) de noyau de stator, moyennant quoi un canal (12) de ventilation de stator est formé par les segments (4) de noyau de stator adjacents et l'acier de canal de stator (11), pour l'écoulement d'un milieu à des fins de refroidissement, dans lequel la pluralité de segments (4) de noyau de stator sont pénétrés par la vis (7) de serrage dont une extrémité est solidaire de la première plaque de pression de noyau (5) et l'autre extrémité est solidaire de la seconde plaque de pression de noyau (6) ; un espace (13) est prévu entre l'acier magnétique de rotor (3) et les segments (4) de noyau de stator, une première plaque annulaire circonférentielle (14), dont une extrémité est solidaire de la première plaque de pression de noyau (5) et l'autre extrémité est solidaire de la seconde plaque de pression de noyau (6), est solidaire des segments (4) de noyau de stator, et au moins trois plaques axiales (15) sont solidaires de la paroi interne de la première plaque annulaire circonférentielle (14) faisant face aux segments (4) de noyau de stator, dans lequel une chambre d'entrée d'air (16) ou une chambre de sortie d'air (17) est formée par la première plaque annulaire circonférentielle (14), les segments (4) de noyau de stator et deux plaques axiales adjacentes (15), et la chambre d'entrée d'air (16) et la chambre de sortie d'air (17) sont agencées en alternance ; une pluralité d'orifices d'entrée d'air (18) et d'orifices de sortie d'air (19) sont configurés sur la première plaque annulaire circonférentielle (14), dans lequel chaque orifice d'entrée d'air (18) est en communication avec la chambre d'entrée d'air (16) correspondante et chaque orifice de sortie d'air (19) est en communication avec la chambre de sortie d'air (17) correspondante ; une première plaque radiale (20) et une seconde plaque radiale (21) sont solidaires de la paroi externe de la première plaque annulaire circonférentielle (14), et une seconde plaque annulaire circonférentielle (22) est solidaire de la première plaque radiale (20) et de la seconde plaque radiale (21) ; un déflecteur incliné (24) est relié à la première plaque radiale (20) par le biais d'une pluralité de plaques de liaison axiales (23) ; un conduit de sortie d'air (25) est relié à la seconde plaque annulaire circonférentielle (22) et communique avec la chambre de sortie d'air (17), tandis qu'un conduit d'air d'admission (26) est relié à la première plaque radiale (20) et est en communication avec la chambre d'entrée d'air (16) ;
b. l'installation du déflecteur incliné (24) au niveau de la sortie d'un conduit d'air d'admission (26), dans lequel l'angle entre le déflecteur incliné (24) et la première plaque radiale (20) est de 30 degrés à 60 degrés, et la mise en place d'une plaque de réglage de volume d'air (27) au niveau de chaque orifice d'entrée d'air (18), dans lequel la plaque de réglage de volume d'air (27) est articulée avec la première plaque annulaire circonférentielle (14), moyennant quoi le débit d'air circonférentiel varie en réglant la plaque de réglage de volume d'air (27) ; et
c. la configuration d'une zone de circulation d'air (29) de l'orifice d'entrée d'air (18) qui est réduite au minimum lorsque l'orifice d'entrée d'air (18) est fermé depuis le côté du conduit d'air d'admission, et est développée au maximum lorsque l'orifice d'entrée d'air (18) est ouvert en direction du côté du conduit d'air d'admission.

2. Procédé selon la revendication 1, **caractérisé en ce que** la feuille (8) d'acier au silicium présente une épaisseur de 0,5 mm ou 0,35 mm.

3. Procédé selon la revendication 1, **caractérisé en ce que** la pluralité de trous d'entrée d'air (18) et de trous de sortie d'air (19) sont agencés alternativement sur la première plaque annulaire circonférentielle (14) à intervalles.

4. Procédé selon la revendication 1, **caractérisé en ce qu'**une grande chambre (28) est formée par la base (1) de rotor, la première plaque annulaire circonférentielle (14) et la première plaque radiale (20), et est en communication avec le conduit d'air d'admission (26) et la chambre d'entrée d'air (16).

5. Procédé selon la revendication 1, **caractérisé en ce qu'**un rapport entre un maximum et un minimum de la zone d'écoulement d'air variable (29) est de 2:1 à 10:1.

6. Structure pour réduire la différence de température circonférentielle de la bobine de générateur/moteur et du noyau, comprenant une base (1) de rotor, un noyau de rotor (2) monté sur la base (1) de rotor, une pluralité d'aciers magnétiques de rotor (3) agencés dans la direction axiale du noyau de rotor (2) dans laquelle la structure comprend en outre une pluralité de segments (4) de noyau de stator, une première plaque de pression de noyau (5), une seconde plaque de pression de noyau (6) et une vis (7) de serrage, dans laquelle un acier de canal de stator (11) est agencé entre n'importe quels deux segments adjacents des segments (4) de noyau de stator, moyennant quoi un canal (12) de ventilation de stator est formé par les segments (4) de noyau de stator adjacents et l'acier de canal de stator (11), pour l'écoulement d'un milieu à des fins de refroidissement, dans lequel la pluralité de segments (4) de noyau de stator sont pénétrés par la vis (7) de serrage dont une extrémité est solidaire de la première plaque de pression de noyau (5) et l'autre extrémité est solidaire de la seconde plaque de pression de noyau (6) ; un espace (13) est prévu entre les aciers magnétiques de rotor (3) et les segments (4) de noyau de stator, une première plaque annulaire circonférentielle (14), dont une extrémité est solidaire de la première plaque de pression de noyau (5) et l'autre extrémité est solidaire de la seconde plaque de pression de noyau (6), est solidaire des segments (4) de noyau de stator, et au moins trois plaques axiales (15) sont solidaires de la paroi interne de la première plaque annulaire circonférentielle (14) faisant face aux segments (4) de noyau de stator, moyennant quoi une chambre d'entrée d'air (16) ou une chambre de sortie d'air (17) est formée par la première plaque annulaire circonférentielle (14), les segments (4) de noyau de stator et deux plaques axiales adjacentes (15), et la chambre d'entrée d'air (16) et la chambre de sortie d'air (17) sont agencées en alternance ; une pluralité d'orifices d'entrée d'air (18) et d'orifices de sortie d'air (19) sont configurés sur la première plaque annulaire circonférentielle (14), dans laquelle chaque orifice d'entrée d'air (18) est en communication avec la chambre d'entrée d'air (16) correspondante et chaque orifice de sortie d'air (19) est en communication avec la chambre de sortie d'air (17) correspondante ; une première plaque radiale (20) et une seconde plaque radiale (21) sont fixées à la paroi externe de la première plaque annulaire circonférentielle (14), et une seconde plaque annulaire circonférentielle (22) est solidaire de la première plaque radiale (20) et de la seconde plaque radiale (21) ; un déflecteur incliné (24) est relié à la première plaque radiale (20) par le biais d'une pluralité de plaques de liaison axiale (23) ; un conduit de sortie d'air (25) est relié à la seconde plaque annulaire circonférentielle (22) et est en communication avec la chambre de sortie d'air (17), tandis qu'un conduit d'air d'admission (26) est relié à la première plaque radiale (20) et est en communication avec la chambre d'entrée d'air (16), le déflecteur incliné (24) est installé au niveau de la sortie du conduit d'air d'admission (26), et l'angle entre le déflecteur incliné (24) et la première plaque radiale (20) est de 30 degrés à 60 degrés.

7. Structure selon la revendication 6, **caractérisée en ce que** la pluralité de trous d'entrée d'air (18) et de trous de sortie d'air (19) sont agencés alternativement sur la première plaque annulaire circonférentielle (14) à intervalles.

8. Structure selon la revendication 6, **caractérisée en ce qu'**une grande chambre (28) est formée par la base (1) de rotor, la première plaque annulaire circonférentielle (14) et la première plaque radiale (20), et est en communication avec le conduit d'air d'admission (26) et la chambre d'entrée d'air (16).
